(19) Europäisches Patentamt / European Patent Office / Office européen des brevets

(11) EP 1 704 655 B1

(12) **EUROPEAN PATENT SPECIFICATION**

(45) Date of publication and mention of the grant of the patent:
**02.07.2008 Bulletin 2008/27**

(21) Application number: **04719426.1**

(22) Date of filing: **11.03.2004**

(51) Int Cl.:
***H04B 7/06*** *(2006.01)* ***H04B 7/00*** *(2006.01)*
***H04L 1/00*** *(2006.01)*

(86) International application number:
**PCT/EP2004/002525**

(87) International publication number:
**WO 2005/099127 (20.10.2005 Gazette 2005/42)**

(54) **APPARATUS FOR ALLOCATING INFORMATION AND POWER TO SUB-CHANNELS OF A CHANNEL AND METHOD FOR ALLOCATING INFORMATION AND POWER TO SUB-CHANNELS OF A CHANNEL**

VORRICHTUNG ZUM VERGEBEN VON INFORMATIONEN UND LEISTUNG AN SUBKANÄLE EINES KANALS UND VERFAHREN ZUM VERGEBEN VON INFORMATIONEN UND LEISTUNG AN SUBKANÄLE EINES KANALS

APPAREIL ET PROCEDE D'AFFECTATION DE DONNEES ET DE PUISSANCE A DES SOUS-VOIE D'UNE VOIE

(84) Designated Contracting States:
**DE GB**

(43) Date of publication of application:
**27.09.2006 Bulletin 2006/39**

(73) Proprietor: **NTT DoCoMo, Inc.**
**Tokyo (JP)**

(72) Inventors:
- **TEJERA PALOMARES, Pedro**
  **80333 Munich (DE)**
- **UTSCHICK, Wolfgang**
  **85051 Ingolstadt (DE)**
- **BAUCH, Gerhard**
  **80799 Munich (DE)**
- **NOSSEK, Josef A.**
  **82393 Iffeldorf (DE)**

(74) Representative: **Zinkler, Franz et al**
**Schoppe, Zimmermann, Stöckeler & Zinkler**
**Postfach 246**
**82043 Pullach bei München (DE)**

(56) References cited:
- **GETU B N ET AL: "MIMO systems: optimizing the use of eigenmodes" 14TH IEEE 2003 INTERNATIONAL SYMPOSIUM ON PERSONAL, INDOOR AND MOBILE RADIO COMMUNICATIONS. PROCEEDINGS, vol. 2, 7 September 2003 (2003-09-07), pages 1129-1133, XP010679169**
- **SHENGLI ZHOU ET AL: "Adaptive modulation for multi-antenna transmissions with channel mean feedback" ICC 2003. 2003 IEEE INTERNATIONAL CONFERENCE ON COMMUNICATIONS. ANCHORAGE, AK, MAY 11 - 15, 2003, IEEE INTERNATIONAL CONFERENCE ON COMMUNICATIONS, NEW YORK, NY : IEEE, US, vol. VOL. 1 OF 5, 11 May 2003 (2003-05-11), pages 2281-2285, XP010642853 ISBN: 0-7803-7802-4**
- **KIESSLING M ET AL: "Short-term and long-term diagonalization of correlated MIMO channels with adaptive modulation" 13TH IEEE INTERNATIONAL SYMPOSIUM ON PERSONAL INDOOR AND MOBILE RADIO COMMUNICATIONS. PIMRC 2002. PROCEEDINGS, vol. 2, 15 September 2002 (2002-09-15), pages 593-597, XP010614294**

EP 1 704 655 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention refers to a wireless communication system, the present invention especially refers to a wireless communication system having a multiple-input multiple-output channel.

Multiple-input multiple-output (MIMO) wireless systems experience a significant performance degradation when the fading at a transmitter and a receiver array is correlated. This is especially true for systems with linear receivers (like minimum mean squared error MMSE). Fading correlations heavily influence the eigenvalue (EV) spectrum of the MIMO channel matrix, e.g. with correlation there are on average only a few dominant EVs and many EVs close to zero. Transmitters devoid of any channel state information (CSI) are not capable of adapting to the different fading states of the MIMO channel and thus transmission power is wasted by pouring it into poor eigenmodes associated with the small EVs.

It has to be noted that such an eigenvalue decomposition of the MIMO channel matrix is specially helpful if perfect channel state information is available at both transmitter and receiver as in such a case a wireless link with multiple transmit antennas and multiple receive antennas results in a possible diagonalization of the MIMO channel. Resulting from such a diagonalization of the MIMO channel, it is possible to split up the MIMO channel into orthogonal sub-channels, each sub-channel corresponding to an eigenvector of the MIMO channel matrix. Fig. 7 shows a schematic view of such a splitting up of the MIMO channel in which the L sub-channels 702 are shown as decoupled (i.e. orthogonal) sub-channels. When information $s_1, s_2, ..., s_L$ is supplied to each of sub-channels 702 the information $s_1, s_2, ..., s_L$ on each of these sub-channels may be processed by a transmit processor 704, which supplies different eigenbeams (i.e. different sub-channels) with the processed information 706. As the eigenbeams have different transmit capacities, the strength of an eigenbeam reveals the amount of information, which can be transmitted on a special eigenbeam. The strength of each of the eigenbeams can be recognized from the eigenvalues $\lambda_1, \lambda_2, ..., \lambda_L$, which directly result from the eigenvalue decomposition of the MIMO channel matrix. Furthermore, when the processed information 706 is transmitted through the different eigenbeams, noise components $\tilde{n}_1, \tilde{n}_2, ..., \tilde{n}_L$ are added while the processed information 706 is transmitted through the sub-channels 702. After being transmitted through the sub-channels, receive signals $w_1, w_2, ..., w_L$ are obtained from every sub-channel. After processing each of the receive signals $w_1, w_2, ..., w_L$ with a receive processor 708, receive information $\hat{s}_1, \hat{s}_2, ..., \hat{s}_L$ results from each of the sub-channels. Having such a diagonalizable MIMO channel, bit and power loading can be applied over the resulting orthogonal channels (i.e. sub-channels) as it is done for example in conventional OFDM (OFDM = orthogonal frequency division multiplexing). For such a case, several methods are well-known to perform bit and power loading aiming at the maximization of bit rates (cf. P.S. Chow, J.M. Cioffi, and J.A.C. Bingham: A Practical Discrete Multitone Transceiver Loading Algorithm for Data Transmission over Spectrally Shaped Channels. IEEE Transactions on Communications, vol. 43, pages 773-775, 1995), minimization of bit error rate (cf. R.F.H. Fischer and J.B. Huber, A New Loading Algorithm for Discrete Multitone Transmission, proceedings of GLOBECOM, pages 724-728, 1996) or minimization of transmit power (cf. US 4,679,227, US 4,731,816, US 4,833,706). If on the contrary, we do only possess knowledge about the correlations of the fading processes of the MIMO channel at the transmitter, channel diagonalization is no longer possible and the above-mentioned methods do not apply. Expressed in other words, it can be said that the only known solution so far consists of treating eigenbeams as orthogonal sub-channels and applying the methods mentioned above on the mentioned eigenbeams. These approaches consider eigenbeams as additive white Gaussian noise (AWGN) orthogonal channels and ignore their fading nature. Especially Fischer and Huber provide a loading algorithm in which rate and transmit power are assigned to maximise the signal-to-noise ratio in each sub-channel. Because a closed form expression can be derived, the algorithm of Fischer and Huber is of low complexity, even lower than the loading algorithm proposed by Chow et al. as mentioned above. However, this loading algorithm is based on simplifying approximative assumptions that lead to suboptimum loadings.

The conference article "MIMO systems: optimizing the use of eigenmodes" by Getu, B.N. et al., presented on the 14th IEEE 2003 International Symposium on Personal, Indoor and Mobile Radio Communications, proceedings, vol. 2, 7th September 2003, pages 1129-1133, XP 010679169 discloses that multiple parallel orthogonal transmission links may be found from a MIMO system using the eigenvectors derived from the SVD of the channel matrix. These transmission links are called eigenmodes. For $(M_t, N_r)$ is equal to (8,4) and $(M_t, N_r)$ is equal to (4,2) MIMO systems, the SER performance of all the eigenmodes have been determined for Rayleigh and Ricean fading channels. Adaptive modulation has been performed on eigenmodes to extract the highest possible through-put (capacity) and at the same time all the functional modes satisfying a required SER. By spacially multiplexing on selected eigenmodes, there will be flexibilities in fulfilling the spectral efficiency and SER System requirements. However, a BER or a SER are calculated in this paper only for individual sub-channels.

The conference paper "Adaptive modulation for a multi-antenna transmission with channel mean feedback" of Shengli Zhou, et al., presented on the ICC 2003 (2003 IEEE International Conference on Communications), Anchorage, AK, May 11-15, 2003, IEEE International Conference on Communications, New York, N.Y.: IEEE, US, vol. 1 of 5, 11th May 2003, pages 2281-2285, XP010642853 ISBN: 0-7803-7802-4 discloses that adaptive modulation has the potential to increase the system through-put significantly by matching transmitter parameters to time-varying channel conditions. However, adaptive modulation assuming perfect channel state information (CSI) is sensitive to CSI imperfections induced by estimation errors and feedback delays. In this paper, an adaptive modulation scheme is designed for multi-antenna transmissions based on partial CSI that models the spacial fading channels as Gaussian random variables with non-zero mean and white covariance, conditioned on feedback information. Based on a two-directional beam former, a transmitter is proposed, which optimally adapts the beam directions, the power allocation between two beams, and the signal constellation, to maximize the transmission rate while maintaining the target bit error rate (BER). Numerical results demonstrate the rate improvement, and illustrate an interesting trade-off that emerges between feedback quality and hardware complexity. However, a BER or a SER are calculated in this paper only for individual sub-channels.

The paper "Short-term and long-term diagonalization of correlated MIMO channels with adaptive modulation" by Ki-essling M. et al., presented on the 13th IEEE International Symposium on Personal Indoor and Mobile Radio Communications, PIMRC 2002, proceedings, vol. 2, 15th September 2002, pages 593-597, XP010614294 discloses that theoretical result on MIMO capacity maximization suggest the decoupling of the MIMO channel into independent sub-channels with optimum water filling on these sub-channels. Those results inspire the development of real systems that diagonalize the MIMO channel and adaptively control the modulation on each of the resulting sub-channels. In this paper a design of a fully adaptive transmitter is studied where transmit filtering and adaptive modulation is controlled by short-term as well as long-term channel state information (channel correlation), where the focus is on channels with correlated fading at transmitter and receiver array. To this end, the use of long-term channel eigenmode by capacity-independent considerations is motivated. Simulation results confirm the potential of fully adaptive transmit processing. However, a BER or a SER are calculated in this paper only for individual sub-channels.

Thus, it is an object of the present invention to provide a possibility for an improved allocation of information and the power to the sub-channels of a channel.

This object is achieved by an apparatus for allocating information and the power to sub-channels of a channel according to claim 1 and a method for allocating information and power to sub-channels of a channel according to claim 16.

Further advantageous embodiments are defined in the dependent claims.

The invention is based on the knowledge that by providing channel information, different information allocation values and different power allocation values, a plurality of estimated symbol error rate values can be determined wherein the information allocation values and the power allocation values are selected preferably resulting in the minimum estimated symbol error rate value. Therefore, in the inventive approach an exhaustive search is preferably carried out in which for example all meaningful information allocations such as bit allocations to sub-channels, as for example eigenbeams, are evaluated and that specific information allocation is selected which preferably results in a minimum upper bound value, the minimum upper bound value being considered as the minimum estimated symbol error rate value. Thus, in the inventive approach an apparatus and a method is provided for determining an optimum allocation of information units (as for example bits) using an upper bound of expected symbol error rate values (symbol error rate = SER) as a criterion. Possible constrains are for example a total number of bits to be transmitted or a maximum transmit power limit. Using this estimated symbol error rate value as an upper bound criterion, an allocation of information units (for example bits) and an optimum power loading can be easily computed. Even so the method is based on an exhaustive search on preferably all allocation possibilities, for realistic numbers of information units and a realistic number of sub-channels, which is preferably defined by a number of antennas, the number of potential allocations remains very low if for example the different strengths of eigenbeams is taken into account. Furthermore, some stop conditions can preferably be introduced into the proposed algorithm that significantly shortens the search.

It is an advantage of the present invention that, unlike state-of-the-art methods, it uses an upper bound of estimated symbol error rate values forming a genuine figure of merit of the system as a criterion and thus being suitable for use in transmitter scenarios in which only partial channel state information at the transmitter is known. Furthermore, it is an advantage of the present invention that the numerical complexity of the proposed algorithm can be lowered without reducing the performance of the algorithm if said stop conditions in the search are implemented and the number of sub-channels to be considered for the optimum allocation is moderately low as for example defined by a maximum number of 10 transmit points, that is 10 transmit antennas. Therefore, the present invention provides the possibility to improve an allocation of information and the power to the sub-channels of the channel, wherein only partial CSI at the transmitter has to be known in contrast to the state-of-the-art approaches wherein full CSI must be known to provide an optimum allocation of information and power to the sub-channels of a channel.

The present invention is described in detail with respect to the following figures, in which:

| | |
|---|---|
| Fig. 1 | shows a block diagram of an inventive apparatus for allocating information and power to sub-channels of a channel in accordance with an embodiment of the present invention; |
| Fig. 2 | shows an exemplary algorithm to carry out the inventive method; |

Fig. 3 a further exemplary routine for carrying out the inventive method;

Fig. 4 a diagram showing the strength of multiple exemplary eigenvalues of a channel matrix;

Fig. 5A and 5B diagrams showing an exemplary power loading and bit loading using the eigenvalues shown in Fig. 4 and using an embodiment of the present invention;

Fig. 5C and 5D diagrams showing the power loading and bit loading of a conventional approximative method using the strength of the eigenvalues as shown in Fig. 4;

Fig. 6A and 6B diagrams showing an estimated bound and an estimated bit error rate with respect to a signal-to-noise ratio (SNR) comparing the inventive approach with a conventional approximative method; and

Fig. 7 a block diagram of a diagonalized channel having L sub-channels, the diagonalization being realisable due to a channel matrix comprising full channel state information.

Fig. 1 shows a block diagram of an apparatus 100 for allocating information and power to sub-channels of a channel. The apparatus 100 comprises means 102 for providing different information allocation values, means 104 for providing different power allocation values, means 106 for determining estimated symbol error rate values, and means 108 for selecting. The means 102 for providing different information allocation values comprises an input 102a for receiving a total information amount to be allocated over all the sub-channels in one symbol. Furthermore, the means 102 for providing different information allocation values comprises an output 102b for outputting different information allocation values. The means 104 for providing different power allocation values comprises an input 104a for receiving a maximum power amount to be allocated to the sub-channels of the channel during the transmission of one symbol. Furthermore, the means 104 for providing different power allocation values comprises a second input 104a' for receiving the information allocation values output by the means 102 for providing different information allocation values and a third input 104a" for receiving channel information. Additionally, the means 104 for providing different power allocation values comprises an output 104b for outputting different power allocation values.

The means 106 for determining estimated symbol error rate values comprises a first input 106a for receiving the information allocation values from the output 102b of the means 102 for providing different information allocation values. Additionally, the means 106 for determining estimated symbol error rate values has a second input 106a' for receiving the power allocation values from the output 104b of the means 104 for providing different power allocation values. Furthermore, the means 106 for determining estimated symbol error rate values comprises a third input 105 for receiving channel information.

Additionally, the means 106 for determining estimated symbol error rate values comprises a first output 106b for outputting estimated symbol error rate values, a second output 110 for outputting information allocation values, the second output 110 being connected to the first input 106a of the means 106 for determining estimated symbol error rate values and a third output 112 for outputting power allocation values, the third output 112 being connected to the second input 106a' of the means 106 for determining estimated symbol error rate values.

The means 108 for selecting comprises a first input 108a for receiving estimated symbol error rate values from the means 106 for determining the estimated symbol error rate values, a second input being connected to the second optput 110 of the means 106 for determining estimated symbol error rate values and a third input being connected to the third output 112 of the means 106 for determining estimated symbol error rate values. Furthermore, the means 108 for selecting comprises a first output $I_{out}$ for outputting selected information allocation values and a second output $P_{out}$ for outputting selected power allocation values. The first output $I_{out}$ is connected to the second input of the means 108 for selecting and the second output $P_{out}$ of the means 108 for selecting being connected to the third input of the means 108 for selecting.

The functionality of the apparatus 100 shown in Fig. 1 can be described as follows:

A total information amount, for example a total number of bits to be transmitted over the channel in one symbol, can be input to the means 102 for providing different information allocation values via the input 102a. The means 102 for providing different information allocation values is configured to provide different information allocation values which may, for example, split up the total information amount and allocate portions of the total information amount to different sub-channels. If, for example, the total information amount comprises 5 bits and the channel comprises 3 sub-channels, the means 102 for providing different information allocation values for example provides a first set of information values assigning 3 bits on the first sub-channel and 1 bit on each of the second and the third sub-channel, wherein the means 102 for providing different information allocation values furthermore provides a second set of information allocation values, wherein 2 bits are assigned to each the first and second sub-channel and 1 bit is assigned to the third sub-channel. Therefore, the means 102 for providing different information allocation values is configured to provide different constellations of information units on the available sub-channels of the channel.

The means 104 for providing different power allocation values is configured to receive a maximum power amount via the input 104a which is for example a hardware constrain. That is the maximum power amount is defined by a transmitter circuit being capable of transmitting for example only 1 Watt power. Based on the knowledge of different information allocation values input to the means 104 for providing different power allocation values via the second input 104a' and the knowledge about the channel input (for example the eigenvalues of the covariance matrix of the channel) to the means 104 via the third input 104a", the means 104 for providing different power allocation values is configured to provide the different power allocation values corresponding to the different information allocation values. Referring back to the example discussed before, the different power allocation values, for example, comprise a first set of power allocation values allocating the one Watt power to the three sub-channels in a way that for example the first sub-channel is allocated 600 mW, wherein the first sub-channel carries three bits of information, and the second and third sub-channel, each carrying one bit for information, being allocated a power of 200 mW each. With respect to the second set of information allocation values, the means 104 for providing different power allocation values may be configured to allocate 400 mW to the first and second sub-channel, each carrying two bits of information wherein the third sub-channel, carrying one bit of information, being assigned 200 mW. Thus, the means for providing different power allocation values is configured to provide different sets of power allocation values corresponding to the different sets of information allocation values provided by the means 102 for providing different information allocation values.

Said sets of different information allocation values and different power allocation values are now fed into means 106 for determining via the first 106a and the second 106a' input. The means 106 for determining furthermore considers channel information provided to the means 106 for determining estimated symbol error rate values on the third input 105 of the means 106 for determining. The exact algorithm for determining estimated symbol error rate values will be discussed later. However, based on the sets of different information allocation values and different power allocation values, the means 106 for determining is configured to provide different estimated symbol error rate values, which are provided at the first output 106b of the means 106 for determining. Furthermore, the information allocation values and the power allocation values, on which the estimated symbol error rate value output at the first output 106b of the means 106 for determining is based on are provided at the second output 110 and the third output 112 of the means 106 for determining at the same time at which the determined estimated symbol error rate value is provided at the first output 106b of the means 106 for determining.

On the basis of the outputs of the means 106 for determining, the means 108 for selecting is configured to select the information allocation value and the power allocation value corresponding to a specific estimated symbol error rate value which is preferably the minimum estimated symbol error rate value the means 108 for selecting receives from the means 106 for determining estimated symbol error rate values. The selected information allocation values then are output at the first output $I_{out}$ of the means 108 for selecting whereas the selected power allocation values are output at the second output $P_{out}$ of the means 108 for selecting.

Furthermore, the apparatus (100) can comprise an adaptive modulator for using an information allocation information output by the first output $I_{out}$ of the means 108 for selecting and a power allocator for using the power allocation information output by the first output $P_{out}$ of the means 108 for selecting, wherein the adaptive modulator and the power allocator are operative to generate signals for the transmit points such that sub-channels of a channel are spatially different from each other

Having a thus configured apparatus 100 for allocating information and the power to sub-channels of a channel, it is possible to provide an optimum allocation of information and power to the sub-channels even if only partial CIS is known at the transmitter. Thus, it can be shown that still this partial channel state information can be used to perform bit and power loading that lead to a performance increase and thus efficiently perform joint bit and power loading using partial CIS at the transmitter.

Referring to the algorithm for determining estimated symbol error rate values the a MIMO link as an example of a channel having a plurality of sub-channels is to be considered in which the relationship between transmit signals x and receive signals y ($x \in C^{M_t x 1}$ und $y \in C^{M_r x 1}$) respectively, is given by equation (1)

$$y = Hx + n \qquad (1)$$

wherein $H \in C^{M_r x M_t}$ represents the MIMO channel and n represents a white Gaussian noise. All knowledge the transmitter has about the channel consists of its transmit correlation matrix given by

$$R_{Tx} = E\left\{H^H H\right\}.$$

The transmit correlation matrix herein is an example of an auto-covariance matrix of the channel. Using this knowledge it is possible to multiply the vector of transmit signals x by the matrix of eigenvectors of $R_{Tx}$ at the transmitter. This linear precoding gives rise to so-called eigenbeams, whose optimality in terms of ergodic capacity has already been shown for Rayleigh-fading channels (cf. S.A. Jafar, S. Vishwanath, and A. Goldsmith: Channel Capacity and Beamforming for Multiple Transmit and Receive Antennas with Covariance Feedback, In: International Conference on Communications ICC, 2001.). However, given a number of bits to be transmitted and a maximum transmit power limit, the question arises about how much power and bits should be allocated to each eigenbeam in order to optimize performance. The answer to this question is exactly the purpose of the present invention.

The model represented by equation (1) can be extended to take into account precoding and power loading operations performed at the transmitter. If $U \in C^{M_t x M_t}$ denotes the matrix of eigenvectors of $R_{Tx}$ and $P \in P^{M_t x M_t}$ is a diagonal matrix assigning power to each of the components of the transmit signal we can write:

$$y = HUP^{1/2}x + n\,.$$

Considering this system model, a maximum-likelihood detection of the signal at the receiver yields equation (2)

$$\hat{x} = \min_{x} \arg\left\|y - HUP^{1/2}x\right\|^2 \quad (2)\,.$$

The probability that in equation (2) $\hat{x}$ is equal to x' having transmitted x conditioned on a particular channel realisation is called pair wise error probability (PEP). For the present system model this probability can be expressed in closed form using the Gaussian error function (cf. G.G. Raleigh and V.K. Jones: Multivariate Modulation and Coding for Wireless Communication, IEEE Journal on Selected Areas in Communications, vol. 17, pages 357-366, May 1999), resulting in equation (3)

$$P(x \rightarrow x'|H) = Q\left(\sqrt{\frac{d^2(x, x'; H)}{2\sigma^2}}\right) \quad (3)$$

wherein $\sigma^2$ is the variance of the complex-valued noise process at the receiver, H stands for a particular channel realisation and d(x,x',H) is the distance of the two transmit signals at the receiver, which is given by equation (4)

$$d^2(x, x'; H) = \left\|HUP^{1/2}\Delta\right\|^2 \quad (4)$$

with $\Delta = x' - x$. Since at the transmitter no information about the current channel realisation is available, it is appropriate to calculate the expectation of equation (3) over -all possible channel realizations, which leads to the ergodic pair wise error probability. However, for this expectation no close solution is available. Fortunately, equation (3) can be tightly upper bounded using the Chernoff bound for the Gaussian error function as equation (5)

$$P(x \rightarrow x'|H) \leq \exp\left(-\frac{d^2(x, x'; H)}{4\sigma^2}\right) \quad (5),$$

whose mean value will give an upper bound of the ergodic pair wise error probability. In order to arrive to the meaningful expression for the expected value of this upper bound some algebraic manipulations on equation (4) are needed,

$$\begin{aligned} d^2(x, x'; H) &= \sum_{m=1}^{M_r} h_m^T U P^{1/2} \Delta \Delta^H P^{1/2} U^H h_m^* \\ &= \sum_{m=1}^{M_r} z_m^T \underbrace{R^{H/2} U P^{1/2} \Delta \Delta^H P^{1/2} U^H R^{1/2}}_{M} z_m^* \\ &= \sum_{m=1}^{M_r} z_m^T M z_m^* \end{aligned}$$

wherein $h_m^T$ denotes the m-th row of matrix H and $R_{Tx} = R^{1/2}R^{1/2}$. For these equalities the assumption has been made that $R_{Tx}$ is a full-rank matrix, which will be true with a probability of almost 1 from an algebraic point of view. Furthermore, assuming Gaussian distributed entries in H, spatial decorrelation at the receiver and that all MISO channel (MISO = multiple-input-single-output) that make up the MIMO channel exhibit the same statistics, the components of $z_m$ are i.i.d. Gaussian variables, viz.

$$E\{z_m^* z_{m'}^T\} = \frac{\delta_{m,m'}}{M_r} I .$$

Considering these properties of vector $z_m$ the expectation of the upper bound in equation (5) can easily be computed and yield equation (6)

$$P(x \to x') \le \left( \prod_{r=1}^{\rho} \left( 1 + \frac{\lambda_r(M)}{4\sigma^2 M_r} \right) \right)^{-M_r} \qquad (6).$$

Here, $\lambda_r(M)$ are eigenvalues of matrix M and ρ its rank. Finally, equation (6) can be rewritten in compact form as a determinant according to equation (7)

$$P(x \to x') \le \left( \det \left( I + \frac{M}{4\sigma^2 M_r} \right) \right)^{-M_r} \qquad (7).$$

Even so equation (7) depends on power and bit loading, it is not very useful as a criterion to assign bits and power to eigenbeams. The dependence on bit loading is not explicit. Besides, it very strongly depends on the particular choice of x and x'. Therefore, it is convenient to look for an upper bound of equation (7) that shows a more explicit dependence on bit loading and at the same time eliminates dependence on a particular pair of symbols. Using the identity det(I+BA) is equal to det(I+AB) we can rewrite equation (7) as

$$P(x \to x') \le \left( 1 + \frac{\Delta^H P \Lambda \Delta}{4\sigma^2 M_r} \right)^{-M_r} \qquad (33),$$

where Λ is the matrix of eigenvalues of $R_{Tx}$ on its diagonal. Now, this expression can easily be upper bounded as shown in the following equation (8)

$$P(x \rightarrow x') \leq \left(1 + \frac{\Delta^H P \Lambda \Delta}{4\sigma^2 M_r}\right)^{-M_r} \leq \sum_{n=1}^{M_t} \left(1 + \frac{d_n^2 \lambda_n P_n}{4\sigma^2 M_r}\right)^{-M_r} \qquad (8).$$

In equation (8), $d_n$ denotes the minimum distance between any two points of a constellation employed for transmission over eigenbeam n, $\lambda_n$ denotes its associated eigenvalue and $P_n$ its powerload. The upper bound in equation (8) can be further re fined by including a factor $\alpha_n$ which can be considered as a heuristic factor in each-of its terms, the heuristic factor $\alpha_n$ being an arbitrary factor or a factor that accounts for the average number of closest neighboring points to any other within the signal constellation. The resulting expression is an upper bound of the expected or estimated symbol error rate, which can be estimated according to equation (9),

$$SER \leq \sum_{n=1}^{M_t} \alpha_n \left(1 + \frac{d_n^2 \lambda_n P_n}{4\sigma^2 M_r}\right)^{-M_r} \qquad (9).$$

Equation (9) will be the criterion that the algorithm uses to evaluate the goodness of a particular bit and power allocation.

Solving an elementary combinatorial problem, we note that B bits can be allocated over $M_t$ eigenbeams in

$$C(M_t + B - 1, B) = \binom{M_t + B - 1}{B} \qquad (43)$$

different ways. Each of these combinations could be evaluated by a brute force algorithm, first, computing the optimum power loading and then, using power and bit loading to obtain a value from equation (9). The allocation of bit and power loading yielding the lowest value should be chosen. For a given bit loading the optimum power loading is obtained minimizing equation (9) subject to a maximum transmit power constrain. The solution is given by equation (10)

$$P_n = \max\left\{\frac{M_r}{K_n}\left((\mu \alpha_n K_n)^{\frac{1}{M_r+1}} - 1\right), 0\right\} \qquad (10),$$

where $\mu$ is chosen to satisfy the constrain

$$\sum_{n=1}^{M_t} P_n \leq P_T$$

and

$$K_n = \frac{d_n^2 \lambda_n}{4\sigma^2}.$$

As an example, for $M_t$ = 4 and B = 6 the number of allocations that such an algorithm should evaluate amounts to 84. Even though this number does not seem to be computationally prohibitive, it might be interesting to reduce it by considering some peculiarities of the problem underlying the present patent application. If eigenvalues are ordered such that

$$\lambda_1 \geq \lambda_2 \geq \ldots \geq \lambda_{M_t}$$

those allocations can be discarded for which weaker eigenbeams are more heavily loaded than stronger eigenbeams, i.e. denoting bit load of eigenbeam n with $b_n$ bits, only allocations with the property

$$b_1 \geq b_2 \geq \ldots \geq b_{M_t},$$

seem to make sense. An allocation of bits violating that property leads to power loading in which most of the power is used to compensate for the overload on weak eigenbeams (cf. equation (10)), resulting in poor performance.

The number of combination for which the non-increasing bit loading property applies can be computed as

$$C = 1 + \left\lfloor \frac{B}{2} \right\rfloor + \sum_{b_3 > 0} \left\lfloor \frac{B - 1 - 3(b_3 - 1)}{2} \right\rfloor + \ldots$$

$$\ldots + \sum_{\substack{b_{M_t} > 0 \\ b_3 \geq \geq b_{M_t}}} \left\lfloor \frac{B - (M_t - 2) - 3(b_3 - b_4) - \ldots - M_t(b_{M_t} - 1)}{2} \right\rfloor$$

where $\lfloor \cdot \rfloor$ returns the next smallest integer. Using this expression, we can now compute the number of combinations with non-increasing bit loading for the previous example. Number of allocations to be evaluated reduces to 9. An algorithm searching for the optimum bit and power loading can be implemented using a series of nested loops that evaluate each of the potential allocations in a well-defined order. Furthermore, it can be taken into consideration that only a number of eigenbeams is loaded with information which is less or equal to the number of receive antennas of the MIMO channel. Therefore, the present approach has an additional degree of freedom with respect to state-of-the-art approaches as these approaches are not capable of considering such a number of receive antennas.

Such a joint power and bit loading search algorithm is sketched in Fig. 2. The algorithm sketched in Fig. 2 comprises a plurality of nested loops 202, 204, and 206 wherein each of the loops is operative to allocate a number of bits to one sub-channel. First, the operation of the innermost loop 202 of the nested loops will be discussed in more detail. The innermost loop 202 is operative to allocate a number of bits $b_2$ to the second strongest eigenbeams n=2, the number of bits ranging from the number of bits $b_3$ allocated to the third strongest eigenbeams n=3 to a value being equivalent to the equation (B $-b_{Mt}$ $-b_{Mt-1}$- ... $-b_3$)/2. Therefore, the minimum number of bits allocated to the second strongest eigenbeam is at least the number of bits allocated to the third strongest eigenbeam, thus making sure that the number of bits allocated to a weaker eigenbeam than the second eigenbeams is lower than the number of bits allocated to the second strongest eigenbeam. Furthermore, the second strongest eigenbeam is allocated a maximum number of bits which is equal to one half of the difference of the total bits B to be allocated and the sum of all bits allocated to the weaker eigenbeams than the second eigenbeam. Therefore, it is possible to make sure that the second strongest eigenbeam is allocated not more bits than the first eigenbeam and thus making sure that the second strongest eigenbeam is allocated a number of bits being less than or at least equal to the number of bits being allocated to the strongest eigenbeam. The above-discussed conditions can be seen from line 208 of the algorithm sketched in Fig. 2. Furthermore, a variable bit loading corresponding to one set of information allocation values is calculated as shown in line 210 in Fig. 2 wherein a power loading based on variable bit_loading is calculated in line 212 of the algorithm sketched in Fig. 2. The power loading corresponds to one set of the different power allocation values as for example shown in Fig. 1. Based on the variables bit_loading and power_loading, a bound is calculated in line 214 of the algorithm sketched in Fig. 2, which corresponds to the estimated symbol error rate value as determined by the means 106 for determining estimated symbol error rate values shown in Fig. 1. Following, the calculated bound is compared to a minimum bound denoted by the variable bound_min, as shown in line 216 of the algorithm. If the bound calculated in line 214 is smaller than the minimum bound, the minimum bound is assigned the value of the bound determined in line 214 and the minimum bit loading constellation and the minimum power loading constellation corresponding to the bound determined in line 214 are saved. These operations are carried out in lines 218 of the algorithm shown in Fig. 2. Thus, it is possible to successively select information allocation values, which correspond to the bit loading computed in line 210 and power allocation values corresponding to the power loading computed in line 212 of the algorithm sketched in Fig. 2, resulting in the minimum estimated symbol error rate value corresponding to the bound computed in the line 214 of the algorithm.

Considering the outer loops 204 and 206 it has to be noted that the explanations with respect to the inner loop 202 apply equivalently. To be more specific, the eigenbeam $M_t$ -1 is assigned a number of bits $b_{mt-1}$ being at least the number of bits $b_{Mt}$ assigned to the weakest eigenbeam n=$M_t$. The maximum number of bits assigned to the second weakest eigenbeam n = $M_t$ -1 is then the total number of bits B to be transmitted minus the number of bits $b_{Mt}$ assigned to the weakest eigenbeam, the result divided by the number of eigenbeams minus one. Thus, the maximum number of bits assigned to the second weakest eigenbeam can be at least as large as if the total number of bits to be transmitted minus the bits allocated to the weakest eigenbeam are equally allocated to all the $M_t$ -1 strongest eigenbeams. The allocation of the number of bits $b_{Mt}$ -1 can be seen from line 220 of the algorithm sketched in Fig. 2.

A number of bits $b_{Mt}$ can be concluded from line 222 of the algorithm sketched in Fig. 2 wherein the number of bits allocated to the weakest eigenbeam $M_t$ is in the range between 0 bits to B divided by $M_t$ bits.

Therefore, according to the algorithm sketched in Fig. 2, first the strongest eigenbeam is assigned all bits, then the second eigenbeam is successively assigned more and more bits up to the maximum admissible value, which is given by the non-increasing bit loading condition, when the third eigenbeam starts being loaded, then the forth and so on till all allocations are evaluated. This ordering of potential bit allocations can be exploited to further reduce the number of computations by introducing stop conditions into the loops. Thus, if for a particular eigenbeam n the assignment of an additional bit $b_n = b_n +1$ does not result in an improvement of the bound we could dispense the search on all allocations for which eigenbeam n and any weaker eigenbeam are loaded with more than $b_n$. The resulting algorithm is sketched in Fig. 3.

Fig. 3 is an algorithm for allocating information and power to sub-channels based on the algorithm shown in Fig. 2 but considering stop conditions in each of the loops. Therefore, the algorithm shown in Fig. 3 is substantially equal to the algorithm shown in Fig. 2 specially comprising inner loops 202, 204, and 206. At the beginning of the algorithm, that is in line 302, a reset of a predefined bound value for the weakest eigenbeam $M_t$ is carried out, wherein the reset is executed by assigning the bound variable a very high value as for example the value of 100. Following, the outer loop 206 starts with line 222 being the same as line 222 shown in the algorithm of Fig. 2. In the next line 304 a reset of a minimum bound value for the second weakest eigenbeam n=$M_t$ -1 is carried out in the same way as the reset of the bound variable for the weakest eigenbeam $M_t$ shown in line 302 of the algorithm in Fig. 3. The next line below, denoting the loop for assigning the second weakest eigenbeam $M_t$ -1 corresponding to line 220 of Fig. 2. Following this scheme, in line 306 a reset of a bound value for the second strongest eigenbeam is carried out in an equivalent way as the reset in line 304 and 302 is executed. The following line again denotes the allocation of a number of bits $b_2$ of the second strongest eigenbeam, which corresponds to line 208 of the algorithm shown in Fig. 2. The three following lines correspond to the lines 210, 212, and 214 in Fig. 2, wherein line 214 is slightly modified in that the bound calculated therein is only the bound for the second strongest eigenbeam. If the bound for the second strongest eigenvalue is smaller than the minimum bound which has been calculated by the run through the loop starting with line 208, the minimum bound for a second strongest eigenbeam is set on the value of the bound calculated in line 214 and a further differentiation is carried out in line 308 comparing a minimum bound for all loops with the bound calculated in line 214 for the innermost loop on which the second strongest eigenbeam is allocated a number $b_2$ of bits. If the bound for the second strongest eigenvalue calculated in line 214 is smaller than the minimum bound, the minimum bound is set on the value of the bound of the second strongest eigenbeam as calculated in line 214, and the bit loading and the power loading are saved according to the lines 218 in the algorithm shown in Fig. 2. If the bound for the second strongest eigenbeam calculated in line 214 is not smaller than the minimum bound for the second strongest eigenbeam, the operation in line 310 following the else statement is carried out. The operation in line 310 is a test whether the number of bits allocated to one of the weaker eigenbeams than the second eigenbeam is less than the number of bits allocated to the second eigenbeam. If there is no weaker eigenbeam than the second eigenbeam being allocated a number -of bits less than the number of bits allocated to the second eigenbeam, the algorithm shown in Fig. 3 shall stop. Else, the instruction in the lines denoted by the reference numeral 312 are executed wherein first a number $n_o$ is calculated being the number of the weakest eigenbeam, which is allocated the same number of bits as the second strongest eigenbeam -1 bit being the second eigenbeam itself a potential candidate. Following, it is tested in line 314 if a minimum bound for the eigenbeam number no is larger than the minimum bound for the second eigenbeam or if the number no is equal to 2. If this is the case, the minimum bound for eigenbeam number no is set equal to the minimum bound value of the second strongest eigenbeam. Following therewith, an instruction to leave the innermost loop 202 and jumping to the loop in which eigenbeam number $n_o$+1 is calculated has to be carried out. If the distinction in line 314 results in a "false" result, the inner loop 202 shall be left and a jump to the loop in which a bit allocation of the eigenbeam number no is calculated shall be carried out.

The instructions as shown in the lines denoted by the reference numeral 316 of the algorithm shown in Fig. 3 provide an equivalent operation to the above-outlined lines starting from line 308 just providing the functionality as described above for further loops of the plurality of nested loops.

Concluding, in the outermost loop 206 a distinction is carried out whether the minimum bound value for the second weakest eigenbeam is less than the minimum bound value for the weakest eigenbeam and if this is the case, the minimum bound value for the weakest eigenbeam is set to the minimum bound value of the second weakest eigenbeam. Contrary, if the minimum bound value for the second weakest eigenbeam is not less than the minimum bound value for the weakest eigenbeam, the algorithm disclosed in Fig. 3 shall stop.

Even so the start conditions introduced in the algorithm seem to be intuitively well founded, the reachability of the optimum allocation is not guaranteed. However, discrepancies between solutions obtained with and without stop conditions turn out to be rather insignificant in terms of performance.

Roughly speaking, it can be argued that if at any stage an increment of the bit load of a particular eigenbeam results in a performance loss, the reason for that is that power cannot compensate for the overload on that eigenbeam and therefore further loading that eigenbeam or weaker eigenbeams with the same load is likely to further degrade performance.

In order to verify the effectiveness the proposed approach has been applied to perform bit and power loading on a channel with $M_t$ = 4 transmit antennas and $M_r$ = 4 receive antennas. The bit load has been chosen to be B = 6 bits and the eigenvalue profile is depicted in Fig. 4. Thus, the Fig. 4 shows the eigenvalues $\lambda_1$, $\lambda_2$, $\lambda_3$, and $\lambda_4$, wherein the first eigenvalue $\lambda_1$ is the eigenvalue corresponding to the strongest eigenbeam. The second eigenvalue $\lambda_2$ being smaller than the first eigenvalue, the third eigenvalue $\lambda_3$ being smaller than the second eigenvalue and the forth eigenvalue $\lambda_4$ being smaller than the third eigenvalue $\lambda_3$. It has to be noted that for transmitting information over the channel, only a number of eigenbeams is used which corresponds to the number of receive antennas used in the MIMO channel environment.

Fig. 5A to 5D show diagrams of bit and power loadings obtained from the application of the proposed approach and from the application of the algorithm presented by Fischer and Huber as mentioned using eigenbeams as if they were orthogonal AWGN channels (approximative method). Fig. 5A shows the power loading based on the present approach wherein it can be seen that the power allocated to the first eigenbeam (denoted by the line 502) is always higher than the power allocated to the second strongest eigenbeam (denoted by the line 504) for all signal-to-noise ratios SNR. Furthermore, Fig. 5B shows the bits allocated to the strongest eigenbeam having the eigenvalue $\lambda_1$, denoted by the line 506 being higher than the bits loaded to the second strongest eigenbeam corresponding to the eigenbeam having the eigenvalue $\lambda_2$, wherein the number of bits allocated to the first eigenbeam is always higher than the number of bits allocated to the second eigenbeam.

Fig. 5C shows the power loading according to the approximative method proposed by Fischer and Huber, in which it can be seen that power is loaded to the first three eigenbeams wherein the third eigenbeam having the eigenvalue $\lambda_3$ is assigned even more power than the first eigenbeam having the eigenvalue $\lambda_1$. Therefore, it has to be noted that a large amount of the total available power is allocated to a weak eigenbeam to provide a bit allocation on the three eigenbeams, which can be seen from Fig. 5D.

Fig. 6A shows a diagram in which the estimated symbol error rate calculated according to equation (9) is shown for the power and bit loading according to the present partial CSI based method in contrast to the approximative method proposed by Fischer and Huber. As can be seen from Fig. 6A the present partial CSI based method provides a lower estimated symbol error rate value (= bound value) than the approximative method proposed by Fischer and Huber for all signal-to-noise ratios SNR. Concluded herefrom a bit error rate (= BER) can be derived as shown in Fig. 6B. Thus, as shown in Fig. 6B it has to be noted that the bit error rate resulting from the present partial CSI based method is always lower than a bit error rate derived from the bit and power loading according to the approximative method proposed by Fischer and Huber for all signal-to-noise ratios SNR.

In Fig. 6A curves of bound values resulting from both methods are depicted. For this example, performance difference amounts to more than 1d B. But more important than that is to observe that while the solution provided by Fischer and Huber is insensitive to essential system parameters such as number of antennas or SNR (cf. Fig. 5C and 5D), the proposed approach takes into account all significant system parameters to deliver bit and power loadings that minimise equation (9) (cf. Fig. 6A). The price to pay is, of course, an increased computational complexity. However, for a realistic number of transmit antennas and bit load this additional complexity is negligible. As an example, the proposed approach with sub-conditions needs in the worst case 6 computations to arrive at the solution shown in Figs. 5A to 5D, and Fig. 6A. Finally, simulation curves are depicted in Fig. 6B which, as can be noted, back-up the choice of equation (9) as a figure of merit for the transmission quality of the MIMO system with partial CSI at the transmitter.

Depending on certain implementation requirements, the inventive methods can be implemented in hardware or in software. The implementation can be performed using a digital storage medium, in particular, a disk or a CD having electronically readable control signals stored thereon, which can cooperate with a programmable computer system such that the inventive methods are performed. Generally, the present invention is therefore a computer program product with a program code stored on a machine-readable carrier, the program code performing the inventive methods, then the computer program product runs on a computer. In other words, the inventive methods are, therefore, a computer program having a program code for performing the inventive methods, when the computer program runs on a computer.

Finally it can be said, that the present invention also includes an detector and a method for detecting a receive signal, the receive signal being output by the channel having the plurality of sub-channels, the receive signal having associated therewith information units allocated to a sub-channel, wherein the detector comprises means for obtaining a sub-channel receive signal, means for obtaining information allocation information for the sub-channel and means for demodulating the sub-channel receive signal based on the allocation information for the sub-channel. With other words, it can be said, that the present invention also includes a receiver which is configured to receive and demodulate a receive signal, wherein the receive signal corresponds to a transmit signal in which the information and power is loaded according to the above-described algorithm.

Summarizing, it can be said that with the inventive approach a joint bit and power loading in a MIMO system can be performed when information about the transmit side fading correlations is available at the transmitter. The constrain of the program are a maximum transmit power limit and a number of bits to be transmitted. The method explores all meaningful bit allocations to find the one that minimises an upper bound of expected symbol error rate values. Stop condition can be introduced into the algorithm that hardly affect performance while significantly reducing the number of computations required in the search process. The method outperforms state-of-the-art methods that are based on perfect CSI and are applied to the partial CSI case in a straightforward manner. For realistic numbers of transmit antennas and bits the complexity of the proposed method poses no obstacle to practical implementation.

## Claims

**1.** Apparatus (100) for allocating information and power to sub-channels of a channel having a plurality of sub-channels, the channel being represented by channel information, comprising:

means for determining (106) a first estimated symbol error rate value estimate for the channel, based on the channel information, a first set of information allocation values selected from different information allocation values and a first set of power allocation values selected from different power allocation values and a second estimated symbol error rate value estimate for the channel, based on the channel information, a second set of information allocation values selected from the different information allocation values and a second set of power allocation values selected from the different power allocation values, wherein a symbol includes a number of information units allocated to the plurality of sub-channels of the channel, the number of information units being collectively transmitted over the channel during a time period, wherein the channel is a multiple-input-multiple-output channel; and

means for selecting (108) the information allocation values (102b) and the power allocation values (104b), which resulted in the lower one of the first and the second estimated symbol error rate value estimate,

wherein a relationship between transmit signals x and receive signals y is given by

$$y=Hx + n,$$

wherein H is a $M_r$ x $M_t$ channel matrix representing said multiple-input-multiple-output channel with $M_r$ receive points or receive antennas and $M_t$ transmit points or transmit antennas or Eigenbeams, and
wherein n represents a white Gaussian noise.

**2.** Apparatus (100) in accordance with claim 1, wherein the channel is said multiple input multiple output channel and the channel information is an auto-covariance matrix of the channel.

**3.** Apparatus (100) in accordance with claim 2, wherein the sub-channels are represented by said eigenbeams, the eigenbeams corresponding to eigenvectors of the auto-covariance matrix of the channel.

**4.** Apparatus (100) according to claim 3, wherein a number of sub-channels of the channel is defined by said predefined number of transmit points being the inputs of the channel and the channel connecting the transmit points with said predefined number of receive points, wherein the apparatus (100) further comprises an adaptive modulator for using the information allocation information and a power allocator for using the power allocation information, wherein the adaptive modulator and the power allocator are operative to generate signals for the transmit points such that sub-channels are spatially different from each other.

**5.** Apparatus (100) according to claim 3 or 4, wherein the means for determining (106) is configured to allocate information units to said predefined number of eigenbeams, the number of eigenbeams being less or equal to the number of receive points.

**6.** Apparatus (100) according to anyone of the preceding claims 1 to 5, further comprising means for providing different information allocation values (102) wherein the information allocation values, which are used by the means (106) for determining in a determination of one estimated symbol error rate value, are provided such that the sum of allocated information units is equal to a total number of information units being collectively transmitted over the channel during the time period.

**7.** Apparatus (100) according to anyone of the preceding claims 1 to 6, further comprising means (104) for providing different power allocation values wherein the power allocation values, which are used by the means (106) for determining in a determination of an estimated symbol error rate value, are provided such that the sum of allocated power is less or equal to a maximum power being allocatible to the plurality of sub-channels.

**8.** Apparatus (100) according to anyone of the preceding claims 1 to 7, wherein the channel information is provided by said channel matrix (105) and wherein the means for determining (106) further comprises:

means for determining a first eigenvalue corresponding to a first eigenvector of the channel matrix and a second eigenvalue corresponding to a second eigenvector of the channel matrix the first eigenvalue being greater than or equal to the second eigenvalue; and
means for allocating a first number of information units to a first eigenbeam corresponding to the first eigenvector and for allocating a second number of information units to a second eigenbeam corresponding to the second eigenvector, an allocation of the first eigenbeam having a higher priority than an allocation of the second eigenbeam.

**9.** Apparatus (100) according to claim 8, wherein the means for allocating is configured to provide the first number of information units being equal to or greater than the second number of information units.

**10.** Apparatus (100) according to anyone of the preceding claims 1 to 9, wherein the channel information is provided by said channel matrix having a number of eigenvalues corresponding to eigenvectors which is equal to said number of transmit points of the channel and wherein the means for determining (106) estimated symbol error rate values is configured to compute the estimated symbol error rate values by the formula

$$SER \leq \sum_{n=1}^{M_t} \alpha_n \left(1 + \frac{d_n^2 \lambda_n P_n}{4\sigma^2 M_r}\right)^{-M_r}$$

wherein n denotes a numbering index, $\alpha_n$ denotes an arbitrary factor assigned to the eigenbeam with number n, $d_n$ is a measure for indicating how many information units are allocated to a sub-channel n, $\lambda_n$ denotes the eigenvalue of eigenbeam n, $P_n$ denotes the power allocated to the eigenbeam n, and $\sigma^2$ denotes the power of said white Gaussian noise at the receiver.

**11.** Apparatus (100) according to claim 10, wherein the means for determining (106) is configured to select $\alpha_n$ corresponding to an average number of closest neighboring points within a predefined signal constellation in eigenbeam n.

**12.** Apparatus (100) according to anyone of the preceding claims 8 to 11, further comprising means (102) for providing information allocation values, the means (102) for providing being operative to reduce the first number of information units allocated to the first eigenbeam and being operative to increase the second number of information units allocated to the second eigenbeam.

**13.** Apparatus (100) in accordance with anyone of the preceding claims 1 to 12, wherein the channel information is provided by said channel matrix having a number of eigenvalues corresponding to eigenvectors which is equal to said number of transmit points of the channel, the apparatus (100) further comprising means (104) for determining power allocation values for a sub-channel according to the equation

$$P_n = \max\left\{\frac{M_t \cdot 4\sigma^2}{d_n^2 \cdot \lambda_n}\left(\left(\mu\alpha_n \frac{d_n^2 \cdot \lambda_n}{4\sigma^2}\right)^{\frac{1}{M_t+1}} - 1\right), 0\right\}$$

wherein n denotes a numbering index, $\alpha_n$ denotes an arbitrary factor assigned to an eigenbeam corresponding to an eigenvector with number n, $d_n$ is a measure for indicating how many information units are allocated to a sub-channel n, $\lambda_n$ denotes an eigenvalue of eigenbeam n, $P_n$ denotes the power allocated to the eigenbeam n, $\sigma^2$ denotes the power of said white Gaussian noise signal at the receiver and $\mu$ denotes a variable being chosen to satisfy the constraint

$$\sum_{n=1}^{M_t} P_n \leq P_T$$

wherein $P_T$ denotes the maximum available transmit power.

**14.** Apparatus (100) in accordance with claim 13, wherein the means (106) for determining is configured to initially allocate a total number of information units to be transmitted to the eigenbeam corresponding to the eigenvector having the highest eigenvalue.

**15.** Apparatus (100) according to claim 4, wherein the number of transmit points is less or equal to 10.

**16.** Method for allocating information and power to sub-channels of a channel having a plurality of sub-channels, the channel being represented by channel information, comprising the following steps:

determining a first estimated symbol error rate value estimate for the channel, based on the channel information, a first set of information allocation values selected from different information allocation values and a first set of power allocation values selected from different power allocation values and a second estimated symbol error rate value estimate for the channel, based on the channel information, a second set of information allocation values selected from the different information allocation values and a second set of power allocation values selected from the different power allocation values, wherein a symbol includes a number of information units allocated to the plurality of sub-channels of the channel, the number of information units being collectively transmitted over the channel during a time period, wherein the channel is a multiple-input-multiple-output channel; and
selecting the information allocation values and the power allocation values, which resulted in the lower one of the first and the second estimated symbol error rate value estimate,
wherein a relationship between transmit signals x and receive signals y is given by

$$y = Hx + n,$$

wherein H is a $M_r$ x $M_t$ channel matrix representing said multiple-input-multiple-output channel with $M_r$ receive points or receive antennas and $M_t$ transmit points or transmit antennas or Eigenbeams, and
wherein n represents a white Gaussian noise.

**17.** Apparatus for transmitting a transmit signal comprising:

an apparatus (100) according to anyone of the preceding claims 1 to 15.

**18.** Computer program having a program code for performing the method in accordance with claim 16, when the program runs on a computer.

## Patentansprüche

**1.** Vorrichtung (100) zum Zuordnen von Informationen und Leistung zu Unterkanälen eines Kanals mit einer Mehrzahl von Unterkanälen, wobei der Kanal durch eine Kanalinformation dargestellt ist, die folgende Merkmale aufweist:

eine Einrichtung zum Bestimmen (106) einer ersten Schätzung eines Werts einer geschätzten Symbolfehlerrate für den Kanal, basierend auf der Kanalinformation, einem ersten Satz von Informationszuordnungswerten, der aus unterschiedlichen Informationszuordnungswerten ausgewählt ist, und einem ersten Satz von Leistungszuordnungswerten, der aus unterschiedlichen Leistungszuordnungswerten ausgewählt ist, und einer zweiten Schätzung eines Werts einer geschätzten Symbolfehlerrate für den Kanal, basierend auf der Kanalinformation, einem zweiten Satz von Informationszuordnungswerten, der aus den unterschiedlichen Informationszuordnungswerten ausgewählt ist, und einem zweiten Satz von Leistungszuordnungswerten, der aus den unterschiedlichen Leistungszuordnungswerten ausgewählt ist, wobei ein Symbol eine Anzahl von Informationseinheiten umfasst, die der Mehrzahl von Unterkanälen des Kanals zugeordnet ist, wobei die Anzahl von Informationseinheiten während einer Zeitdauer gesammelt über den Kanal gesendet wird, wobei der Kanal ein Kanal mit mehreren Eingängen und mehreren Ausgängen ist; und
eine Einrichtung zum Auswählen (108) der Informationszuordnungswerte (102b) und der Leistungszuordnungswerte (104b), die sich in der unteren der ersten und zweiten Schätzung des Werts der geschätzten Symbolfehlerrate ergeben haben,
wobei eine Beziehung zwischen Sendesignalen x und Empfangssignalen y durch

$$y = Hx + n$$

gegeben ist, wobei H eine $M_r x M_t$-Kanalmatrix ist, die den Kanal mit mehreren Eingängen und mehreren Ausgängen mit $M_r$ Empfangspunkten oder Empfangsantennen und $M_t$ Sendepunkten oder Sendeantennen oder Eigenstrahlen darstellt, und
wobei n ein weißes gaußsches Rauschen darstellt.

**2.** Vorrichtung (100) gemäß Anspruch 1, bei der der Kanal der Kanal mit mehreren Eingängen und mehreren Ausgängen ist und die Kanalinformation eine Autokovarianzmatrix des Kanals ist.

**3.** Vorrichtung (100) gemäß Anspruch 2, bei der die Unterkanäle durch die Eigenstrahlen dargestellt sind, wobei die Eigenstrahlen Eigenvektoren der Autokovarianzmatrix des Kanals entsprechen.

**4.** Vorrichtung (100) gemäß Anspruch 3, bei der eine Anzahl von Unterkanälen des Kanals **dadurch** definiert ist, dass die vordefinierte Anzahl von Sendepunkten die Eingänge des Kanals sind und der Kanal die Sendepunkte mit der vordefinierten Anzahl von Empfangspunkten verbindet, wobei die Vorrichtung (100) ferner einen adaptiven Modulator zum Verwenden der Informationszuordnungsinformation und einen Leistungszuordner zum Verwenden der Leistungszuordnungsinformation aufweist, wobei der adaptive Modulator und der Leistungszuordner wirksam sind, um Signale für die Sendepunkte derart zu erzeugen, dass Unterkanäle sich räumlich voneinander unterscheiden.

**5.** Vorrichtung (100) gemäß Anspruch 3 oder 4, bei der die Einrichtung zum Bestimmen (106) konfiguriert ist, um der vordefinierten Anzahl von Eigenstrahlen Informationseinheiten zuzuordnen, wobei die Anzahl von Eigenstrahlen kleiner oder gleich der Anzahl von Empfangspunkten ist.

**6.** Vorrichtung (100) gemäß einem der vorhergehenden Ansprüche 1 bis 5, die ferner eine Einrichtung zum Bereitstellen von unterschiedlichen Informationszuordnungswerten (102) aufweist, wobei die Informationszuordnungswerte, die durch die Einrichtung (106) zum Bestimmen bei einer Bestimmung eines Werts einer geschätzten Symbolfehlerrate verwendet werden, derart bereitgestellt sind, dass die Summe von zugeordneten Informationseinheiten gleich einer Gesamtanzahl von Informationseinheiten ist, die während der Zeitdauer gesammelt über den Kanal übertragen werden.

**7.** Vorrichtung (100) gemäß einem der vorhergehenden Ansprüche 1 bis 6, die ferner eine Einrichtung (104) zum Bereitstellen von unterschiedlichen Leistungszuordnungswerten aufweist, wobei die Leistungszuordnungswerte, die durch die Einrichtung (106) zum Bestimmen bei einer Bestimmung eines Werts einer geschätzten Symbolfehlerrate verwendet werden, derart bereitgestellt sind, dass die Summe von zugeordneter Leistung kleiner oder gleich einer Maximalleistung ist, die der Mehrzahl von Unterkanälen zuordenbar ist.

**8.** Vorrichtung (100) gemäß einem der vorhergehenden Ansprüche 1 bis 7, bei der die Kanalinformation durch die Kanalmatrix (105) bereitgestellt wird und bei der die Einrichtung zum Bestimmen (106) ferner folgende Merkmale aufweist:

eine Einrichtung zum Bestimmen eines ersten Eigenwerts, der einem ersten Eigenvektor der Kanalmatrix entspricht, und eines zweiten Eigenwerts, der einem zweiten Eigenvektor der Kanalmatrix entspricht, wobei der erste Eigenwert größer oder gleich dem zweiten Eigenwert ist; und

eine Einrichtung zum Zuordnen einer ersten Anzahl von Informationseinheiten zu einem ersten Eigenstrahl, der dem ersten Eigenvektor entspricht, und zum Zuordnen einer zweiten Anzahl von Informationseinheiten zu einem zweiten Eigenstrahl, der dem zweiten Eigenvektor entspricht, wobei eine Zuordnung des ersten Eigenstrahls eine höhere Priorität als eine Zuordnung des zweiten Eigenstrahls hat.

**9.** Vorrichtung (100) gemäß Anspruch 8, bei der die Einrichtung zum Zuordnen konfiguriert ist, um die erste Anzahl von Informationseinheiten, die gleich oder größer der zweiten Anzahl von Informationseinheiten ist, bereitzustellen.

**10.** Vorrichtung (100) gemäß einem der vorhergehenden Ansprüche 1 bis 9, bei der die Kanalinformation durch die Kanalmatrix bereitgestellt wird, die eine Anzahl von Eigenwerten aufweist, die Eigenvektoren entsprechen und gleich der Anzahl von Sendepunkten des Kanals sind, und bei der die Einrichtung zum Bestimmen (106) von Werten einer geschätzten Symbolfehlerrate konfiguriert ist, um die Werte einer geschätzten Symbolfehlerrate durch die Formel

$$SER \le \sum_{n=1}^{M_t} \alpha_n \left(1 + \frac{d_n^2 \lambda_n P_n}{4\sigma^2 M_r}\right)^{-M_r}$$

zu berechnen, wobei n einen Nummerierungsindex bezeichnet, $\alpha_n$ einen willkürlichen Faktor bezeichnet, der dem Eigenstrahl mit der Nummer n zugewiesen ist, $d_n$ ein Maß zum Anzeigen dessen ist, wie viele Informationseinheiten einem Unterkanal n zugeordnet sind, $\lambda_n$ den Eigenwert des Eigenstrahls n bezeichnet, $P_n$ die Leistung bezeichnet, die dem Eigenstrahl n zugeordnet ist, und $\sigma^2$ die Leistung des weißen gaußschen Rauschens an dem Empfänger bezeichnet.

**11.** Vorrichtung (100) gemäß Anspruch 10, bei der die Einrichtung zum Bestimmen (106) konfiguriert ist, um $\alpha_n$ entsprechend einer durchschnittlichen Anzahl von nächstgelegenen benachbarten Punkten innerhalb einer vordefinierten Signalkonstellation in einem Eigenstrahl n auszuwählen.

**12.** Vorrichtung (100) gemäß einem der vorhergehenden Ansprüche 8 bis 11, die ferner eine Einrichtung (102) zum Bereitstellen von Informationszuordnungswerten aufweist, wobei die Einrichtung (102) zum Bereitstellen wirksam ist, um die erste Anzahl von Informationseinheiten, die dem ersten Eigenstrahl zugeordnet ist, zu reduzieren, und wirksam ist, um die zweite Anzahl von Informationseinheiten, die dem zweiten Eigenstrahl zugeordnet ist, zu erhöhen.

**13.** Vorrichtung (100) gemäß einem der vorhergehenden Ansprüche 1 bis 12, bei der die Kanalinformation durch die Kanalmatrix bereitgestellt wird, die eine Anzahl von Eigenwerten aufweist, die Eigenvektoren entsprechen und gleich der Anzahl von Sendepunkten des Kanals ist, wobei die Vorrichtung (100) ferner eine Einrichtung (104) zum Bestimmen von Leistungszuordnungswerten für einen Unterkanal gemäß der Gleichung

$$P_n = \max\left\{\frac{M_r \cdot 4\sigma^2}{d_n^2 \cdot \lambda_n}\left(\left(\mu\alpha_n \frac{d_n^2 \cdot \lambda_n}{4\sigma^2}\right)^{\frac{1}{M_r+1}} - 1\right), 0\right\}$$

aufweist, wobei n einen Nummerierungsindex bezeichnet, $\alpha_n$ einen willkürlichen Faktor bezeichnet, der einem Eigenstrahl zugeordnet ist, der einem Eigenvektor mit einer Nummer n entspricht, $d_n$ ein Maß zum Anzeigen dessen ist, wie viele Informationseinheiten einem Unterkanal n zugeordnet sind, $\lambda_n$ einen Eigenwert eines Eigenstrahls n bezeichnet, $P_n$ die Leistung bezeichnet, die dem Eigenstrahl n zugeordnet ist, $\sigma^2$ die Leistung des weißen gaußschen Rauschsignals bei dem Empfänger bezeichnet und $\mu$ eine Variable bezeichnet, die gewählt ist, um die Randbedingung

$$\sum_{n=1}^{M_t} P_n \leq P_T$$

zu erfüllen, wobei $P_T$ die maximal verfügbare Sendeleistung bezeichnet.

**14.** Vorrichtung (100) gemäß Anspruch 13, bei der die Einrichtung (106) zum Bestimmen konfiguriert ist, um anfänglich dem Eigenstrahl, der dem Eigenvektor mit dem höchsten Eigenwert entspricht, eine Gesamtanzahl von zu sendenden Informationseinheiten zuzuordnen.

**15.** Vorrichtung (100) gemäß Anspruch 4, bei der die Anzahl von Sendepunkten kleiner oder gleich 10 ist.

**16.** Verfahren zum Zuordnen von Informationen und Leistung zu Unterkanälen eines Kanals mit einer Mehrzahl von Unterkanälen, wobei der Kanal durch eine Kanalinformation dargestellt ist, das die folgenden Schritte aufweist:

Bestimmen einer ersten Schätzung eines Werts einer geschätzten Symbolfehlerrate für den Kanal, basierend auf der Kanalinformation, einem ersten Satz von Informationszuordnungswerten, der aus unterschiedlichen Informationszuordnungswerten ausgewählt ist, und einem ersten Satz von Leistungszuordnungswerten, der aus unterschiedlichen Leistungszuordnungswerten ausgewählt ist, und einer zweiten Schätzung eines Werts einer geschätzten Symbolfehlerrate für den Kanal, basierend auf der Kanalinformation, einem zweiten Satz von Informationszuordnungswerten, der aus den unterschiedlichen Informationszuordnungswerten ausgewählt ist, und einem zweiten Satz von Leistungszuordnungswerten, der aus den unterschiedlichen Leistungszuordnungswerten ausgewählt ist, wobei ein Symbol eine Anzahl von Informationseinheiten umfasst, die der Mehrzahl von Unterkanälen des Kanals zugeordnet sind, wobei die Anzahl von Informationseinheiten während einer Zeitdauer gesammelt über den Kanal gesendet wird, wobei der Kanal ein Kanal mit mehreren Eingängen und mehreren Ausgängen ist; und
Auswählen der Informationszuordnungswerte und der Leistungszuordnungswerte, die sich in der unteren der ersten und zweiten Schätzung eines Werts einer geschätzten Symbolfehlerrate ergeben haben,
wobei eine Beziehung zwischen Sendesignalen x und Empfangssignalen y durch

$$y = Hx + n$$

gegeben ist, wobei H eine $M_r x M_t$-Kanalmatrix ist, die den Kanal mit mehreren Eingängen und mehreren Ausgängen mit $M_r$ Empfangspunkten oder Empfangsantennen und $M_t$ Sendepunkten oder Sendeantennen oder Eigenstrahlen darstellt, und
wobei n ein weißes gaußsches Rauschen darstellt.

**17.** Vorrichtung zum Senden eines Sendesignals, die folgendes Merkmal aufweist:

eine Vorrichtung (100) gemäß einem der vorhergehenden Ansprüche 1 bis 15.

**18.** Computerprogramm mit einem Programmcode zum Durchführen des Verfahrens gemäß Anspruch 16, wenn das Programm auf einem Computer abläuft.

## Revendications

**1.** Appareil (100) pour attribuer des informations et de l'énergie à des sous-canaux d'un canal présentant une pluralité de sous-canaux, le canal étant représenté par des informations de canal, comprenant:

un moyen destiné à déterminer (106) une première estimation de valeur de taux d'erreur de symbole estimée pour le canal sur base des informations de canal, d'un premier ensemble de valeurs d'attribution d'informations sélectionnées parmi différentes valeurs d'attribution d'informations et d'un premier ensemble de valeurs d'attribution d'énergie sélectionnées parmi différentes valeurs d'attribution d'énergie et une deuxième estimation de valeur de taux d'erreur de symbole estimée pour le canal sur base des informations de canal, d'un deuxième ensemble de valeurs d'attribution d'informations sélectionnées parmi les différentes valeurs d'attribution d'informations et un deuxième second ensemble de valeurs d'attribution d'énergie sélectionnées parmi les différentes valeurs d'attribution d'énergie, où un symbole comporte un nombre d'unités d'information attribuées à la pluralité de sous-canaux du canal, le nombre d'unités d'information étant transmis collectivement via le canal pendant un laps de temps, où le canal est un canal à entrées multiples et sorties multiples; et
un moyen pour sélectionner (108) les valeurs d'attribution d'informations (102b) et les valeurs d'attribution d'énergie (104b) qui avaient pour résultat la plus basse parmi la première et la deuxième estimation de valeur de taux d'erreur de symbole estimée,
dans lequel un rapport entre les signaux de transmission x et les signaux de réception y est donné par

$$y = Hx + n,$$

où H est une matrice de canaux $M_r$ x $M_t$ représentant ledit canal à entrées multiples et sorties multiples avec $M_r$ points de réception ou antennes de réception et $M_t$ points de transmission ou antennes de transmission ou faisceaux propres, et où n représente un bruit gaussien blanc.

**2.** Appareil (100) selon la revendication 1, dans lequel le canal est ledit canal à entrées multiples et sorties multiples et les informations de canal sont une matrice à auto-covariance du canal channel.

**3.** Appareil (100) selon la revendication 2, dans lequel les sous-canaux sont représentés par lesdits faisceaux propres, les faisceaux propres correspondant à des vecteurs propres de la matrice à auto-covariance du canal.

**4.** Appareil (100) selon la revendication 3, dans lequel un nombre de sous-canaux est défini par ledit nombre prédéfini de points de transmission qui sont les entrées du canal et le canal connectant les points de transmission audit nombre prédéfini de points de réception, dans lequel l'appareil (100) comprend par ailleurs un modulateur adaptatif destiné à utiliser les informations d'attribution d'information et un moyen d'attribution d'énergie destiné à utiliser les informations d'attribution d'énergie, dans lequel le modulateur adaptatif et le moyen d'attribution d'énergie sont opérationnels pour générer des signaux pour les points de transmission de sorte que les sous-canaux soient spatialement différents l'un de l'autre.

**5.** Appareil (100) selon la revendication 3 ou 4, dans lequel le moyen pour déterminer (106) est configuré de manière à attribuer des unités d'information audit nombre prédéfini de faisceaux propres, le nombre de faisceaux propres étant inférieur ou égal au nombre de points de réception.

**6.** Appareil (100) selon l'une quelconque des revendications 1 à 5 précédentes, comprenant par ailleurs un moyen destiné à fournir des valeurs d'attribution d'information différentes (102), dans lequel les valeurs d'attribution d'information qui sont utilisées par le moyen (106) pour déterminer lors d'une détermination d'une valeur de taux d'erreur de symbole estimée sont fournies de sorte que la somme des unités d'information attribuées soit égale à un nombre total d'unités d'information transmis collectivement via le canal pendant la laps de temps.

**7.** Appareil (100) selon l'une quelconque des revendications 1 à 6 précédentes, comprenant par ailleurs un moyen (104) destiné à fournir différentes valeurs d'attribution d'énergie, dans lequel les valeurs d'attribution d'énergie qui sont utilisées par le moyen (106) pour déterminer lors d'une détermination d'une valeur de taux d'erreur de symbole estimée sont fournies de sorte que la somme de l'énergie attribuée soit inférieure ou égale à une énergie maximale attribuable à la pluralité de sous-canaux.

**8.** Appareil (100) selon l'une quelconque des revendications 1 à 7 précédentes, dans lequel les informations de canal sont fournies par ladite matrice de canaux (105) et dans lequel le moyen pour déterminer (106) comprend par ailleurs:

un moyen destiné à déterminer une première valeur propre correspondant à un premier vecteur propre de la matrice de canaux et une deuxième valeur propre correspondant à un deuxième vecteur propre de la matrice de canaux, la première valeur propre étant supérieure ou égale à la deuxième valeur propre; et
un moyen destiné à attribuer un premier nombre d'unités d'information à un premier faisceau propre correspondant au premier vecteur propre et à attribuer un deuxième nombre d'unités d'information à un deuxième faisceau propre correspondant au deuxième vecteur propre, une attribution du premier faisceau propre ayant une plus haute priorité qu'une attribution du deuxième faisceau propre.

**9.** Appareil (100) selon la revendication 8, dans lequel le moyen pour attribuer est configuré de manière à fournir le premier nombre d'unités d'information égal ou supérieur au deuxième nombre d'unités d'information.

**10.** Appareil (100) selon l'une quelconque des revendications 1 à 9 précédentes, dans lequel les informations de canal sont fournies par ladite matrice de canaux présentant un nombre de valeurs propres correspondant aux vecteurs propres qui est égal audit nombre de points de transmission du canal et dans lequel le moyen destiné à déterminer (106) les valeurs de taux d'erreur de symbole estimées est configuré de manière à calculer les valeurs de taux d'erreur de symbole estimées par la formule

$$SER \leq \sum_{n=1}^{M_r} \alpha_n \left(1 + \frac{d_n^2 \lambda_n P_n}{4\sigma^2 M_r}\right)^{-M_r}$$

où n désigne un indice de numérotation, $\alpha_n$ désigne un facteur arbitraire attribué au faisceau propre au numéro n, $d_n$ est une mesure pour indiquer le nombre d'unités d'information qui sont attribuées à un sous-canal n, $\lambda_n$ désigne la valeur propre du faisceau propre n, $P_n$ désigne l'énergie attribuée au faisceau propre n, et $\sigma^2$ désigne l'énergie dudit bruit gaussien blanc au récepteur.

**11.** Appareil (100) selon la revendication 10, dans lequel le moyen pour déterminer (106) est configuré de manière à sélectionner $\alpha_n$ correspondant à un nombre moyen de points voisins les plus proches dans une constellation de signal prédéfinie dans le faisceau propre n.

**12.** Appareil (100) selon l'une quelconque des revendications 8 à 11 précédentes, comprenant par ailleurs un moyen (102) destiné à fournir des valeurs d'attribution d'information, le moyen (102) pour fournir étant opérationnel pour réduire le premier nombre d'unités d'information attribuées au premier faisceau propre et étant opérationnel pour augmenter le deuxième nombre d'unités d'information attribuées au deuxième faisceau propre.

**13.** Appareil (100) selon l'une quelconque des revendications 1 à 12 précédentes, dans lequel les informations de canal sont fournies par ladite matrice de canal présentant un nombre de valeurs propres correspondant aux vecteurs propres qui est égal audit nombre de points de transmission du canal, l'appareil (100) comprenant par ailleurs un moyen (104) destiné à déterminer des valeurs d'attribution d'énergie pour un sous-canal selon l'équation

$$P_n = \max\left\{\frac{M_r \cdot 4\sigma^2}{d_n^2 \cdot \lambda_n}\left(\left(\mu\alpha_n \frac{d_n^2 \cdot \lambda_n}{4\sigma^2}\right)^{\frac{1}{M_r+1}} - 1\right), 0\right\}$$

où n désigne un indice de numérotation, $\alpha_n$ désigne un facteur arbitraire attribué à un faisceau propre correspondant à un vecteur propre au numéro n, $d_n$ est une mesure pour indiquer le nombre d'unités d'information qui sont attribuées à un sous-canal n, $\lambda_n$ désigne une valeur propre du faisceau propre n, $P_n$ désigne l'énergie attribuée au faisceau propre n, $\sigma^2$ désigne l'énergie dudit signal de bruit gaussien blanc au récepteur et $\mu$ désigne une variable choisie de manière à satisfaire la contrainte

$$\sum_{n=1}^{M_r} P_n \leq P_T$$

où $P_T$ désigne la puissance de transmission maximale disponible.

**14.** Appareil (100) selon la revendication 13, dans lequel le moyen (106) pour déterminer est configuré de manière à attribuer initialement un nombre total d'unités d'information à transmettre vers le faisceau propre correspondant au vecteur propre présentant la valeur propre la plus élevée.

**15.** Appareil (100) selon la revendication 4, dans lequel le nombre de points de transmission est inférieur ou égal à 10.

**16.** Procédé pour attribuer des informations et de l'énergie à des sous-canaux d'un canal présentant une pluralité de sous-canaux, le canal étant représenté par des informations de canal, comprenant les étapes suivantes consistant à:

déterminer une première estimation de valeur de taux d'erreur de symbole estimée pour le canal sur base des informations de canal, d'un premier ensemble de valeurs d'attribution d'informations sélectionnées parmi différentes valeurs d'attribution d'informations et d'un premier ensemble de valeurs d'attribution d'énergie sélectionnées parmi différentes valeurs d'attribution d'énergie et une deuxième estimation de valeur de taux d'erreur de symbole estimée pour le canal sur base des informations de canal, d'un deuxième ensemble de valeurs d'attribution d'informations sélectionnées parmi les différentes valeurs d'attribution d'informations et d'un deuxième ensemble de valeurs d'attribution d'énergie sélectionnées parmi les différentes valeurs d'attribution d'énergie, où un symbole comporte un nombre d'unités d'information attribuées à la pluralité de sous-canaux du canal, le nombre d'unités d'information étant transmis collectivement via le canal pendant un laps de temps, où le canal est un canal à entrées multiples et sorties multiples; et
sélectionner les valeurs d'attribution d'informations et les valeurs d'attribution d'énergie qui avaient pour résultat la plus basse parmi la première et la deuxième estimation de valeur de taux d'erreur de symbole estimée,
dans lequel un rapport entre les signaux de transmission x et les signaux de réception y est donné par

$$\mathbf{y} = \mathbf{Hx} + \mathbf{n},$$

où H est une matrice de canaux $M_r$ x $M_t$ représentant ledit canal à entrées multiples et sorties multiples avec $M_r$ points de réception ou antennes de réception et $M_t$ points de transmission ou antennes de transmission ou faisceaux propres, et
où n représente un bruit gaussien blanc.

**17.** Appareil destiné à transmettre un signal de transmission comprenant:

un appareil (100) selon l'une quelconque des revendications 1 à 15 précédentes.

**18.** Programme d'ordinateur ayant un code de programme pour réaliser le procédé selon la revendication 16 lorsque le programme est exécuté sur un ordinateur.

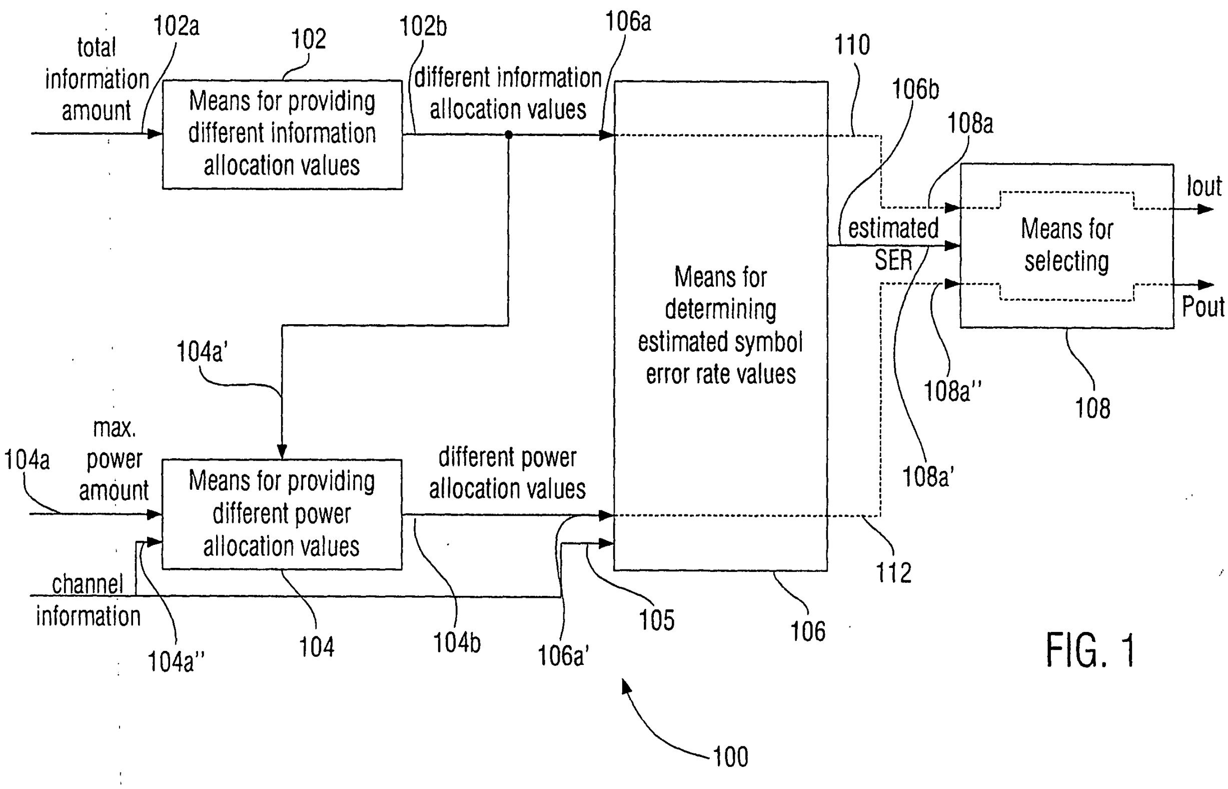
total information amount
102a
102
Means for providing different information allocation values
102b
different information allocation values
106a
110
106b
108a
Iout
Means for selecting
estimated SER
Pout
Means for determining estimated symbol error rate values
104a'
108a''
108
max. power amount
104a
Means for providing different power allocation values
different power allocation values
108a'
112
channel information
104a''
104
104b
106a'
105
106
100

FIG. 1

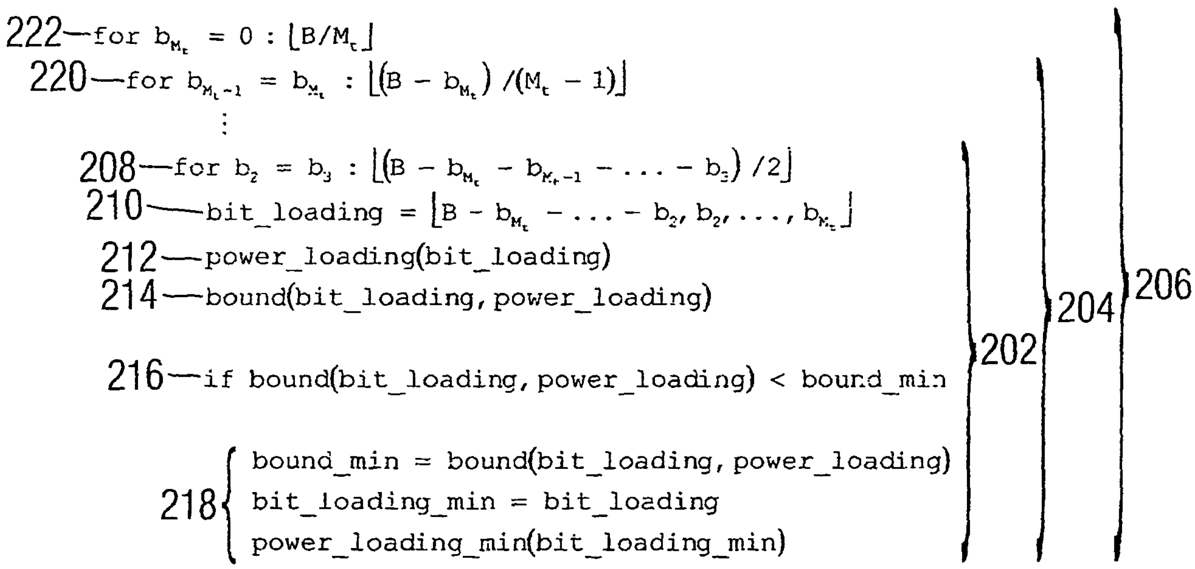
222—for $b_{M_t}$ = 0 : ⌊B/$M_t$⌋
220—for $b_{M_t-1}$ = $b_{M_t}$ : ⌊(B − $b_{M_t}$) /($M_t$ − 1)⌋
⋮
208—for $b_2$ = $b_3$ : ⌊(B − $b_{M_t}$ − $b_{M_t-1}$ − . . . − $b_3$) /2⌋
210—bit_loading = ⌊B − $b_{M_t}$ − . . . − $b_2$, $b_2$, . . . , $b_{M_t}$⌋
212—power_loading(bit_loading)
214—bound(bit_loading, power_loading)
216—if bound(bit_loading, power_loading) < bound_min
218
bound_min = bound(bit_loading, power_loading)
bit_loading_min = bit_loading
power_loading_min(bit_loading_min)
202
204
206

FIG. 2

```
302—reset bound_Mt _ min
222—for b_Mt = 0 : ⌊B/Mt⌋
 304—reset bound_Mt-1 _ min
  220—for b_Mt-1 = b_Mt : ⌊(B - b_Mt) /(Mt - 1)⌋
        ⋮
     306—reset bound_2 _ min
      208—for b_2 = b_3 : ⌊(B - b_Mt - b_Mt-1 - . . . - b_3) /2⌋
       210—bit_loading = [B - b_Mt - . . . - b_2, b_2, . . . , b_Mt]
        212—power_loading(bit_loading)
         214—bound_2 = bound(bit_loading, power_loading)
             if bound_2 < bound_2_min
                bound_2_min = bound_2
      308—if bound_2 < bound_min
              bound_min = bound(bit_loading, power_loading)
          218 bit_loading_min = bit_loading
              power_loading_min(bit_loading_min)
           else
      310—if {n | b_n < b_2 - 1} = Ø ⇒ stop
            else
              n_0 = max_n{{n | b_n = b_2 - 1} ∪ {2}}
      314—    if (bound_n0_min > bound_2_min) or (n_0 = 2)
          312   bound_n0_min = bound_2_min
                go to loop n_0 + 1
              else ⇒ go to loop n_0
         end
            ⋮
        if  bound_Mt-2_min < bound_Mt-1_min
          bound_Mt-1_min = bound_Mt-2_min
        else
          if {n | b_n < b_Mt-1 - 1} = Ø ⇒ stop
   316    else
            n_0 = max_n{{n | b_n = b_Mt-1 - 1} ∪ {Mt - 1}}
            if (bound_n0_min > bound_Mt-1_min) or (n_0 = Mt - 1)
              bound_n0_min = bound_Mt-1_min
              go to loop n_0 + 1
            else ⇒ go to loop n_0
       end
       if bound_Mt-1_min < bound_Mt_min ⇒ bound_Mt_min = bound_Mt-1_min
       else ⇒ stop
```

202 204 206

FIG 3

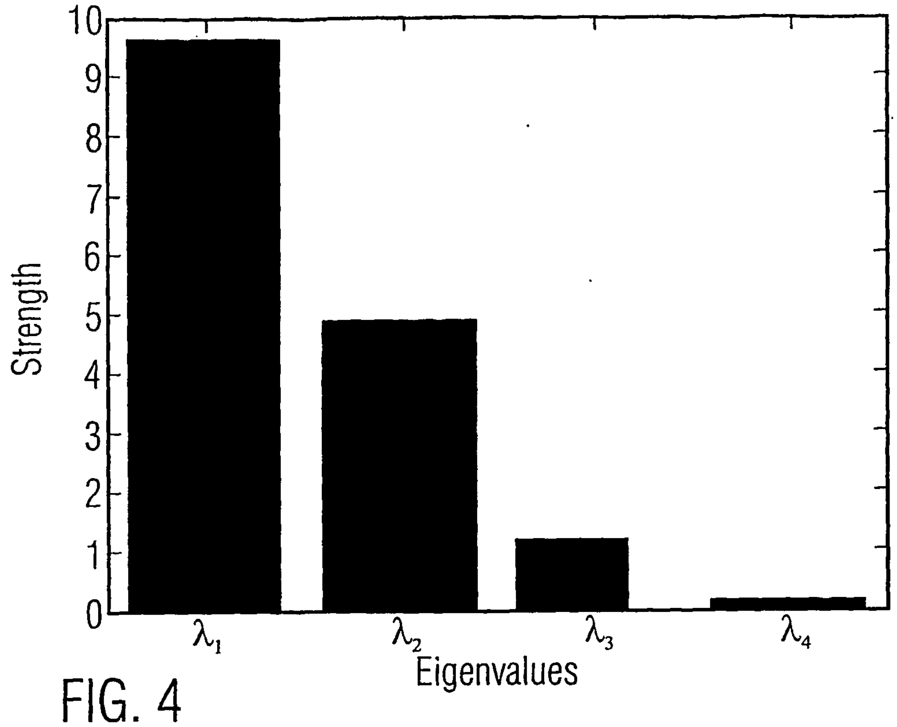


FIG. 4

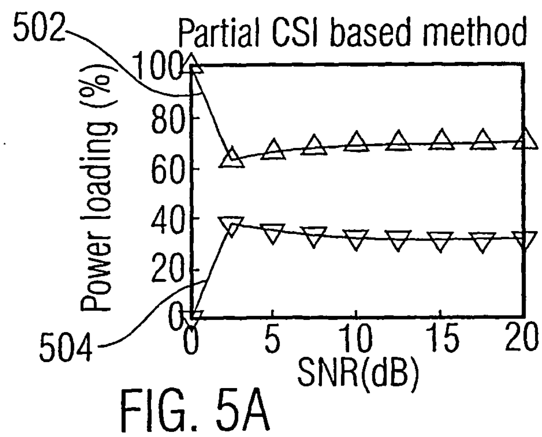


FIG. 5A

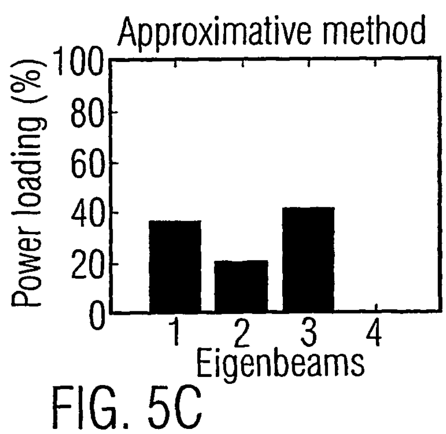


FIG. 5C

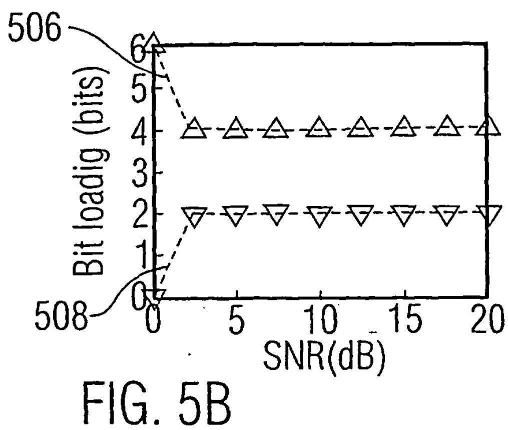


FIG. 5B

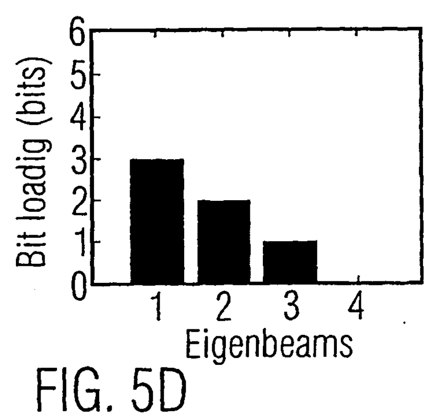


FIG. 5D

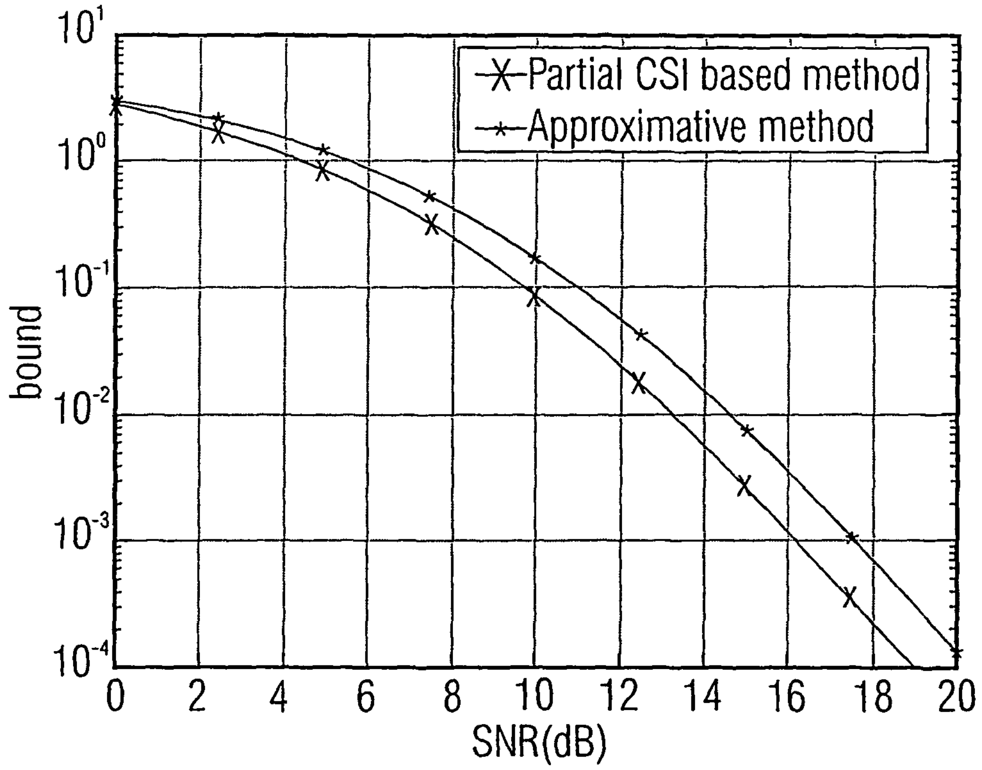
Partial CSI based method
Approximative method
$10^{1}$
$10^{0}$
$10^{-1}$
$10^{-2}$
$10^{-3}$
$10^{-4}$
bound
0
2
4
6
8
10
12
14
16
18
20
SNR(dB)

FIG. 6A

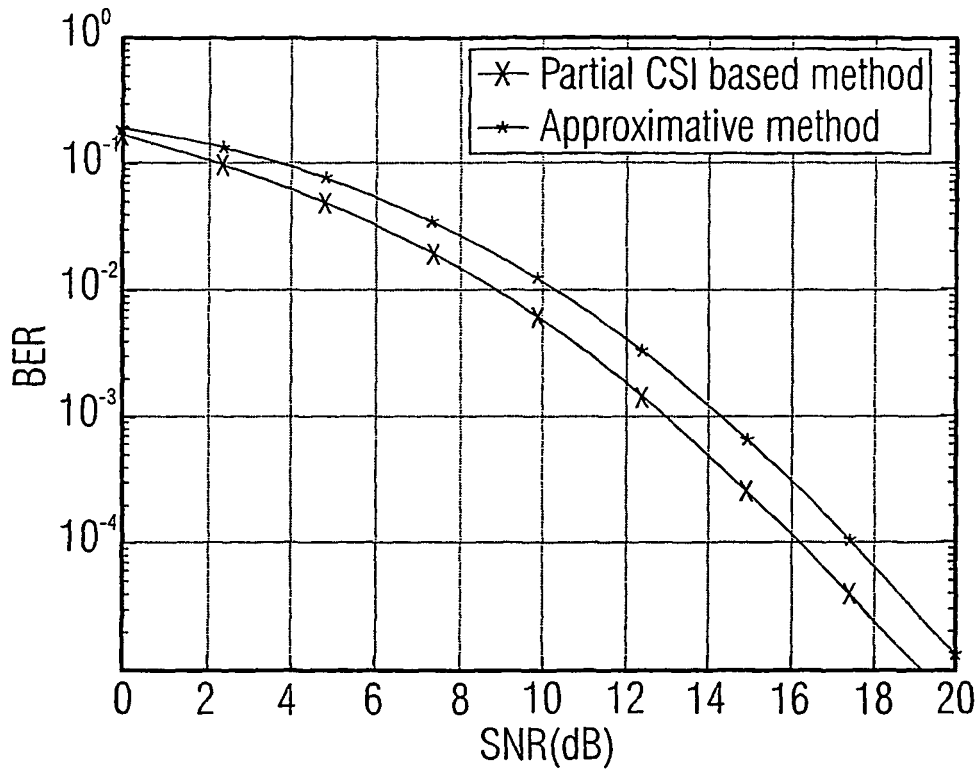
Partial CSI based method
Approximative method
BER
SNR(dB)
$10^0$
$10^{-1}$
$10^{-2}$
$10^{-3}$
$10^{-4}$
0
2
4
6
8
10
12
14
16
18
20

FIG. 6B

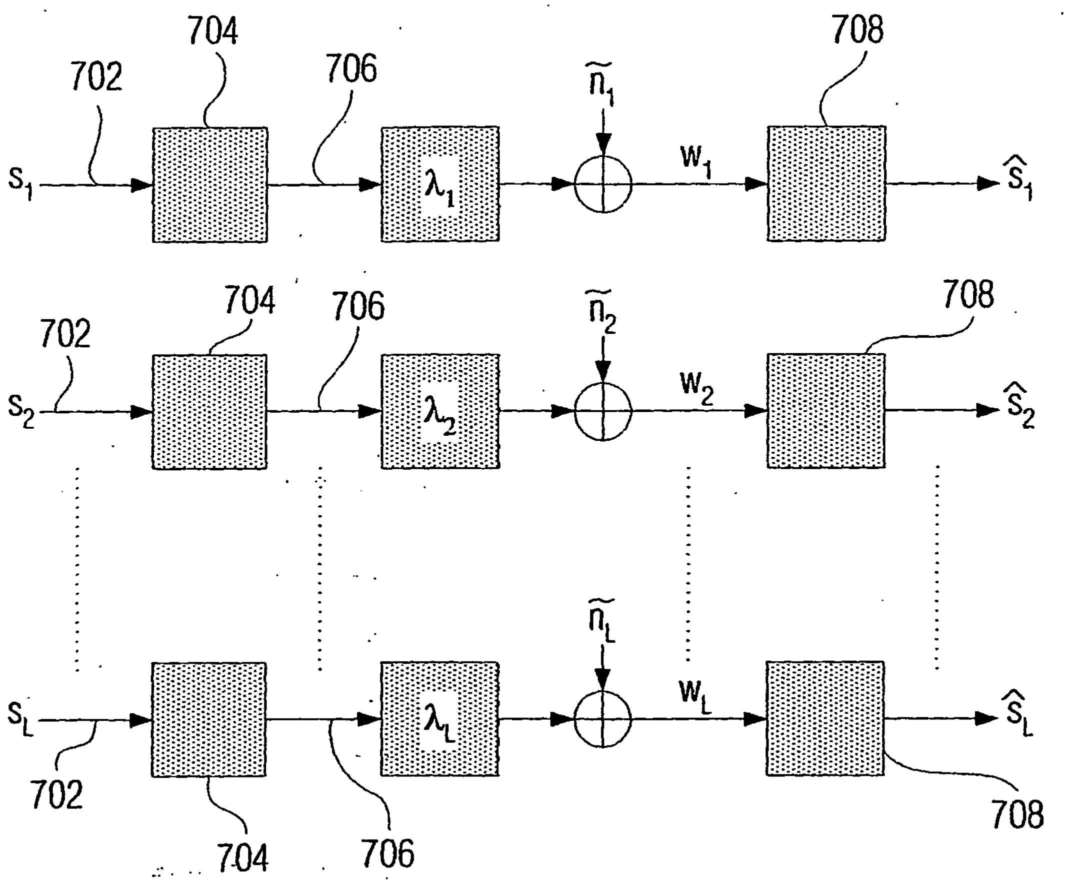
704
702
706
$\tilde{n}_1$
708
$s_1$
$\lambda_1$
$w_1$
$\hat{s}_1$
704
706
$\tilde{n}_2$
708
702
$s_2$
$\lambda_2$
$w_2$
$\hat{s}_2$
$\tilde{n}_L$
$s_L$
$\lambda_L$
$w_L$
$\hat{s}_L$
702
708
704
706

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4679227 A
- US 4731816 A
- US 4833706 A

### Non-patent literature cited in the description


- **P.S. CHOW ; J.M. CIOFFI ; J.A.C. BINGHAM.** A Practical Discrete Multitone Transceiver Loading Algorithm for Data Transmission over Spectrally Shaped Channels. *IEEE Transactions on Communications,* 1995, vol. 43, 773-775
- **R.F.H. FISCHER ; J.B. HUBER.** proceedings of GLOBECOM. *A New Loading Algorithm for Discrete Multitone Transmission,* 1996, 724-728
- **GETU, B.N. et al.** MIMO systems: optimizing the use of eigenmodes. *14th IEEE 2003 International Symposium on Personal, Indoor and Mobile Radio Communications, proceedings,* 07 September 2003, vol. 2, 1129-1133
- **SHENGLI ZHOU et al.** Adaptive modulation for a multi-antenna transmission with channel mean feedback. *ICC 2003 (2003 IEEE International Conference on Communications,* 11 May 2003
- IEEE International Conference on Communications. 11 May 2003, vol. 1, 2281-2285
- **KI-ESSLING M. et al.** Short-term and long-term diagonalization of correlated MIMO channels with adaptive modulation. *13th IEEE International Symposium on Personal Indoor and Mobile Radio Communications, PIMRC 2002, proceedings,* 15 September 2002, vol. 2, 593-597
- **G.G. RALEIGH ; V.K. JONES.** Multivariate Modulation and Coding for Wireless Communication. *IEEE Journal on Selected Areas in Communications,* May 1999, vol. 17, 357-366